# FASCICULE DE BREVET EUROPEEN

(11) **EP 3 752 419 B1**
(45) Date de publication et mention de la délivrance du brevet: **08.03.2023**
(21) Numéro de dépôt: 19717506.0
(22) Date de dépôt: 16.01.2019
(51) Int. Cl.: B64C 37/02

(54) **DISPOSITIF DE REMORQUAGE D'UN AÉRONEF SANS MOTEUR PAR UN AÉRONEF SANS PILOTE EMBARQUÉ; AÉRONEF MUNI D'UN TEL DISPOSITIF DE REMORQUAGE ET PROCÉDÉ DE REMORQUAGE D'UN AÉRONEF SANS MOTEUR PAR UN AÉRONEF SANS PILOTE EMBARQUÉ**
VORRICHTUNG ZUM SCHLEPPEN EINES NICHT ANGETRIEBENEN FLUGZEUGS MIT EINEM FAHRERLOSEN FLUGZEUG; FLUGZEUG, DAS MIT EINER SOLCHEN SCHLEPPVORRICHTUNG AUSGESTATTET IST, UND VERFAHREN ZUM SCHLEPPEN EINES NICHT ANGETRIEBENEN FLUGZEUGS MIT EINEM FAHRERLOSEN FLUGZEUG
DEVICE FOR TOWING A NON-POWERED AIRCRAFT BY A PILOTLESS AIRCRAFT; AIRCRAFT EQUIPPED WITH SUCH A TOWING DEVICE AND METHOD FOR TOWING A NON-POWERED AIRCRAFT BY A PILOTLESS AIRCRAFT

(30) Priorité: 12.02.2018 FR 1870152
(43) Date de publication de la demande: 23.12.2020
(73) Titulaire: ARNOUL, Francois, 94440 Villecresnes (FR); ARNOUL, Patrick, 78720 Dampierre-en-Yvelines (FR)
(72) Inventeur: ARNOUL, Francois, 94440 Villecresnes (FR); ARNOUL, Patrick, 78720 Dampierre-en-Yvelines (FR)
(86) Numéro de dépôt international: PCT/FR2019/000006
(87) Numéro de publication internationale: WO 2019/155132

(56) Documents cités:
- WO-A1-00/76845
- FR-A1- 2 685 283
- US-A- 2 954 185
- US-A- 4 267 987
- US-A- 5 188 313

## Description

L'invention concerne un dispositif de remorquage d'un aéronef sans moteur de type PUL (pour Planeur Ultra Léger, avec ou sans pilote, que ce soit un planeur, un planeur ultraléger tel que parapente ou deltaplane, ou une voile de traction) par un aéronef sans pilote embarqué (appelé « drone tracteur »).

L'invention concerne également un aéronef sans pilote embarqué muni d'un tel dispositif de remorquage et un procédé de remorquage d'un aéronef sans moteur par un aéronef sans pilote embarqué.

La pratique du vol libre, c'est-à-dire à bord d'un aéronef dépourvu de moteur, nécessite soit que le pilote (appelé libériste) s'élance depuis un point haut pour s'envoler, soit qu'il soit tracté par un véhicule motorisé.

Cette dernière solution est principalement utilisée en plaine où le relief n'est pas suffisamment haut pour permettre un envol sûr et capable de capter des courants d'air ascendants.

Le véhicule motorisé utilisé dépend de l'aéronef sans moteur utilisé pour le vol libre.

Les avions-planeurs sont tractés par des avions motorisés jusqu'à une altitude suffisante pour que le planeur puisse attraper des courants ascendants et prolonger son vol.

Cependant, cela nécessite des moyens lourds pour le remorquage qui, outre leurs coûts, ne sont pas adaptés, en termes de puissance et de vitesse, au remorquage de parapentes ou de deltaplane.

En outre, cela nécessite une piste d'envol et d'atterrissage longue. Or, de telles pistes sont peu répandues et restent inutilisables lorsque le vent n'est pas orienté parallèlement à la piste.

Il existe également des systèmes de traction adaptés au parapente et mis en oeuvre par un treuil motorisé. Ils sont de deux types : à treuil enrouleur et à treuil dévidoir.

Le système à treuil enrouleur est constitué d'un treuil autour duquel est enroulé un câble de traction dont l'extrémité libre est munie d'une attache libérable par le libériste (pilote du parapente).

Le treuil enrouleur est positionné à l'extrémité d'une piste d'au moins 1 km de long, de telle sorte que le parapente se trouve face au vent. Puis le câble est déroulé jusqu'à l'autre extrémité de la piste où se trouve le parapente et y est fixé. Pour le décollage, le câble est enroulé par l'opérateur du treuil, tractant ainsi le parapente qui s'élève dans les airs. Le libériste peut ensuite se larguer en libérant le câble lorsqu'il est suffisamment haut pour attraper des courants d'air ascendants.

Le treuil enrouleur motorisé est le plus communément utilisé, mais son utilisation reste délicate, car il est statique. En effet, le libériste en situation de décollage se trouve à la distance maximum de l'opérateur du treuil (câble entièrement déroulé). C'est un point critique qui impose un minimum de deux opérateurs qualifiés pour assister le libériste au décollage, l'un au niveau du libériste (appelé «starter») l'autre au niveau du treuil (appelé « treuilleur»), ainsi qu'une liaison radio compte tenu de la distance qui les sépare (de 600 à 1000 m généralement).

Le système à treuil dévidoir est constitué d'un treuil porté par un véhicule motorisé de type camionnette.

Le véhicule est positionné à proximité du libériste et face à une piste d'au moins 1 km de long, de telle sorte qu'il se trouve face au vent. Puis le câble est déroulé jusqu'au libériste et y est fixé. Pour le décollage, le véhicule démarre doucement et le libériste court pour élever sa voile. Puis le véhicule accélère pour faire décoller le libériste. Alors que le véhicule avance, le câble est déroulé pour permettre au parapente d'atteindre une altitude suffisante pour le mettre en situation de vol et idéalement attraper un courant d'air ascendant.

Le treuil dévidoir présente l'avantage d'être situé à proximité du libériste pendant la phase délicate du décollage, ce qui facilite la communication et le contrôle visuel.

Ces deux systèmes présentent de nombreux inconvénients.

Le premier est qu'ils nécessitent une piste longue et rectiligne, de l'ordre de 1 à 2 km. Or, de telles pistes sont peu répandues et inutilisables lorsque le vent n'est pas orienté parallèlement à la piste. Le nombre de jours d'utilisation du treuil est donc limité, de sorte que le système est peu rentable.

Par ailleurs, ils nécessitent des opérateurs qualifiés. En effet, le treuil de ces deux systèmes étant lié au sol, le remorquage du parapente peut induire un phénomène dit « de verrouillage » qui tend à projeter le libériste au sol, risquant de le blesser gravement voire de le tuer.

Ce phénomène est similaire à ce qui arrive avec les cerfs-volants qui tendent, dans certaines conditions, à s'écraser violemment au sol.

De manière comparable, par exemple en cas de vent légèrement latéral ou en cas de dérive latérale du véhicule ou plus communément en cas d'une réaction tardive du pilote, il existe un risque de voir la voile du parapente partir sur une trajectoire latérale qui, si elle n'est pas corrigée par le libériste, pourra faire basculer le parapente et son pilote et les entraîner vers une trajectoire fortement descendante jusqu'au sol. Dans cette situation, l'opérateur du treuil a la responsabilité d'intervenir en réduisant progressivement l'effort de traction pour déverrouiller la voile avant la mise en danger du libériste treuillé.

Le savoir-faire de l'opérateur du treuil est donc primordial.

Enfin, il n'est pas possible de faire décoller de nombreux libéristes en même temps, au risque qu'ils se percutent en l'air. En effet, le remorquage est restreint à une zone peu étendue, de sorte qu'il faut attendre un temps certain pour que le libériste qui vient d'être remorqué sorte de la zone de lancement.

Le document WO0076845 décrit un système de transport d'objet, notamment de véhicules, à l'aide d'un hélicoptère. Bien que sans moteur, l'objet transporté n'est pas un aéronef car il ne présente aucune voilure capable de produire une portance afin d'assurer la sustentation de l'objet. Le système de ce document ne permet donc pas de résoudre le problème de traction d'un aéronef sans moteur.

L'objectif de la présente invention est de proposer un système de remorquage d'un aéronef sans moteur sûr, c'est-à-dire sans risque de phénomène de verrouillage, polyvalent, c'est-à-dire capable d'être utilisé sur de nombreux terrains et quel que soit le sens du vent, plus accessible aux débutants, économique, et rapide à mettre en oeuvre pour permettre le remorquage successif de nombreux aéronefs sans moteur sans risque.

À cette fin, la présente invention propose d'utiliser comme aéronef tracteur un aéronef à voilure tournante sans pilote embarqué, appelé «drone tracteur», muni d'un dispositif de remorquage apte à mesurer en permanence la traction (force et angle(s)) exercée sur l'aéronef sans moteur, l'aéronef à voilure tournante étant programmé pour tenir compte des valeurs de traction pour adapter son vol (trajectoire - cap et altitude - et puissance de traction) de manière dynamique et en temps réel.

L'utilisation d'un tel drone permet de résoudre le problème des pistes ainsi que le problème du phénomène de verrouillage.

En outre, le pilote du drone reste à terre et n'a besoin de superviser que le décollage et la traction du libériste, l'atterrissage du drone après libération du libériste pouvant être automatisé. Aucun autre assistant n'est alors nécessaire.

De plus, le drone peut remorquer successivement plusieurs libéristes dans des zones de remorquages éloignées les unes des autres et permettre à plusieurs libéristes de voler en même temps.

Le drone peut avantageusement assister le pilote lors du décollage et de la traction du libériste, de sorte que la sécurité des libéristes en vol et des équipements est très largement améliorée.

Par ailleurs, l'invention permet également de soulever dans les airs un système présentant une prise au vent importante comme l'aile de traction d'un navire écologique pour en faciliter sa mise en place.

À cette fin, l'invention a pour objet un dispositif de remorquage d'un aéronef sans moteur par un aéronef à voilure tournante sans pilote embarqué comprenant une unité centrale de commande et un plan de rotation de la voilure tournante, le dispositif de remorquage comprenant :
- Un bras de fixation à l'aéronef à voilure tournante, présentant un axe longitudinal dit de « lacet » et muni d'un organe de fixation destiné à être fixé à un organe de fixation complémentaire de l'aéronef, perpendiculairement au plan de rotation de la voilure tournante, en position d'utilisation ; et
- Un bras de traction, présentant un axe longitudinal dit de « roulis », et dont une extrémité est destinée à être reliée à un câble de traction de l'aéronef sans moteur et une extrémité est monté sur le bras de fixation de manière pivotante de manière à présenter au moins un degré de liberté en rotation par rapport à l'aéronef à voilure tournante, autour d'un axe, dit « de tangage», perpendiculaire à l'axe longitudinal du bras de fixation,
le dispositif de remorquage comprenant :
- un moyen de mesure de force de traction exercée entre le câble et le bras de traction ; et
- un moyen de mesure d'une altitude relative des deux aéronefs.

Selon d'autres modes de réalisation :
- le moyen de mesure de force de traction peut être un capteur de force, et le moyen de mesure de l'altitude relative peut comprendre un capteur angulaire, dit « de tangage », d'angle de rotation du bras de traction autour de l'axe de tangage ;
- le bras de traction peut être monté de manière pivotante par rapport à l'aéronef à voilure tournante selon au moins deux degrés de liberté en rotation autour de deux axes de rotation : le premier axe de tangage et un deuxième axe, dit « de lacet», parallèle à l'axe longitudinal du bras de fixation, le dispositif de remorquage comprenant un deuxième capteur angulaire, dit « de lacet», d'angle de rotation du bras de traction autour de l'axe de lacet ;
- le bras de traction peut être monté de manière pivotante par rapport à l'aéronef à voilure tournante selon trois degrés de liberté en rotation autour de trois axes de rotation : le premier axe de tangage, le deuxième axe de lacet, et un troisième axe, dit « de roulis » parallèle à l'axe longitudinal du bras de traction, le dispositif de remorquage comprenant un troisième capteur, dit « de roulis », d'un angle de rotation autour de l'axe de roulis ;
- le câble de traction peut être fixé à une extrémité du bras de traction par un dispositif de largage commandable apte à libérer le câble de traction du bras de traction ;
- le dispositif de largage peut comprendre :
   - Un organe de fixation réversible du câble de traction ;
   - Un organe de déverrouillage en prise avec l'organe de fixation pour déverrouiller l'organe de fixation et libérer le câble de traction de l'organe de fixation ;
   - Au moins une servocommande apte à actionner l'organe de déverrouillage sur commande de l'unité centrale de l'aéronef à voilure tournante en position d'utilisation ;
- le dispositif de largage peut comprendre un fusible mécanique calibré pour commander le dispositif de largage et libérer le câble de traction de l'organe de fixation ;
- les capteurs peuvent comprendre un émetteur muni d'une antenne programmé pour transmettre les signaux par liaison sans fil à l'unité centrale de l'aéronef à voilure tournante ; et/ou
- les capteurs peuvent être reliés par liaison filaire à l'organe de fixation du bras de fixation, cet organe de fixation comprenant un contact électrique destiné à être en contact avec un contact électrique correspondant sur l'aéronef de sorte qu'en position d'utilisation, les capteurs puissent transmettre les signaux par liaison filaire à l'unité centrale de l'aéronef à voilure tournante.

L'invention a également pour objet un aéronef à voilure tournante présentant un plan de rotation de la voilure et un axe de symétrie, l'aéronef comprenant un moyen de fixation d'un dispositif de remorquage précédent, tel que le bras de fixation est perpendiculaire au plan de rotation de la voilure tournante.

Selon d'autres modes de réalisation :
- le moyen de fixation peut comporter un contact électrique relié à l'unité centrale afin de transmettre par liaison filaire, en position d'utilisation, des informations issues du ou des capteurs du dispositif de remorquage à l'unité centrale ;
- la voilure tournante peut comprendre au moins deux hélices tournantes dans un même plan ; et/ou
- l'unité centrale peut être programmée pour commander la voilure tournante en réponse à des signaux transmis par le ou les capteurs du dispositif de remorquage.

L'invention a également pour objet un procédé de remorquage d'un aéronef sans moteur, comprenant les étapes suivantes :
(a) fournir un aéronef à voilure tournante sans pilote embarqué précédent;
(b) fixer un dispositif de remorquage précédent sur l'aéronef à voilure tournante de telle sorte que le bras de fixation soit perpendiculaire au plan de rotation de la voilure tournante ;
(c) fixer une extrémité d'un câble de traction à une extrémité du bras de traction du dispositif de traction, et une autre extrémité du câble de traction à un aéronef sans moteur ;
(d) commander un décollage vertical de l'aéronef à voilure tournante à une hauteur dite « d'attente » en vol stationnaire ;
(e) commander un déplacement horizontal de l'aéronef pour obtenir une valeur de force de traction, calculée par l'unité centrale de l'aéronef à partir des mesures fournies par les capteurs du dispositif de traction, comprise entre une valeur nulle et une valeur seuil dite « de pré tension » suffisante pour tendre le câble de traction ;
(f) commander un déplacement horizontal et vertical de l'aéronef pour obtenir une valeur de force de traction, calculée par l'unité centrale de l'aéronef à partir des mesures fournies par les capteurs du dispositif de traction, comprise entre la valeur seuil de pré tension et une valeur seuil dite « de remorquage » suffisante pour faire décoller l'aéronef sans moteur et le remorquer jusqu'à une altitude de largage ;
(g) une fois l'altitude de largage atteinte, commander un déplacement horizontal et vertical de l'aéronef pour obtenir une valeur de force de traction, calculée par l'unité centrale de l'aéronef à partir des mesures fournies par les capteurs du dispositif de traction, sensiblement égale à une valeur seuil dite « de largage » ;
(h) commander un décrochage du câble entre l'aéronef sans moteur et l'aéronef à voilure tournante.

Selon d'autres modes de réalisation :
- au cours de l'étape (d), la hauteur d'attente peut être comprise entre 40 cm et 250 cm, de préférence environ 100 cm ;
- au cours de l'étape (f), la commande de déplacement horizontal et vertical peut être obtenue en augmentant progressivement la vitesse de rotation de la voilure tournante ;
- au cours de l'étape (h), le câble peut être décroché de l'aéronef sans moteur et reste accroché à l'aéronef à voilure tournante ;
- au cours de l'étape (h), le câble peut être décroché de l'aéronef à voilure tournante et reste accroché à l'aéronef sans moteur ;
- au cours de l'étape (h), le câble peut être décroché de l'aéronef sans moteur et de l'aéronef à voilure tournante ; et/ou
- le procédé peut comprendre, en outre, une étape (i) de commande d'un retour de l'aéronef à voilure tournante selon une trajectoire de sécurité et d'un atterrissage à une position géographique déterminée.

D'autres caractéristiques de l'invention seront énoncées dans la description détaillée ci-après, faite en référence aux dessins annexés, qui représentent, respectivement :
- la figure 1, un schéma de principe d'un drone tracteur muni d'un dispositif de traction selon l'invention ;
- la figure 2, une vue schématique en perspective d'un aéronef à voilure tournante muni d'un dispositif de remorquage selon l'invention ;
- la figure 3, une vue schématique en perspective d'un agrandissement partiel de la figure 2 centré sur le dispositif de remorquage selon l'invention ;
- la figure 4, une vue schématique en perspective selon un autre angle de vue du dispositif de remorquage selon l'invention de la figure 3 ;
- les figures 5 à 8, des vues schématiques en plan de côté d'un dispositif de largage commandable équipant un dispositif de remorquage selon l'invention, depuis la position de verrouillage jusqu'à la position de largage du câble ;
- la figure 9, une vue schématique en perspective du dispositif de largage commandable des figures 5 à 8, montrant la structure de l'extrémité du crochet ;
- la figure 10, une vue schématique en plan d'un pilote de parapente avant décollage par un drone muni d'un dispositif de remorquage selon l'invention ;
- la figure 11, une vue schématique en plan d'un pilote de parapente pendant le décollage par un drone muni d'un dispositif de remorquage selon l'invention ;
- la figure 12, une vue schématique en plan d'un pilote de parapente pendant le remorquage par un drone muni d'un dispositif de remorquage selon l'invention en phase d'ascension ;
- la figure 13, une vue schématique en plan d'un pilote de parapente pendant le remorquage par un drone muni d'un dispositif de remorquage selon l'invention avant largage du drone ;
- la figure 14, une vue schématique en plan d'un pilote de parapente après largage du drone en mode normal ; et
- la figure 15, une vue schématique en plan d'un pilote de parapente après largage du drone en mode d'urgence.

La description ci-après est faite pour un parapente comme exemple d'aéronef sans moteur. D'autres aéronefs sans moteur peuvent être remorqués grâce au dispositif de remorquage selon l'invention, tel qu'un deltaplane, ou une voile de bateau.

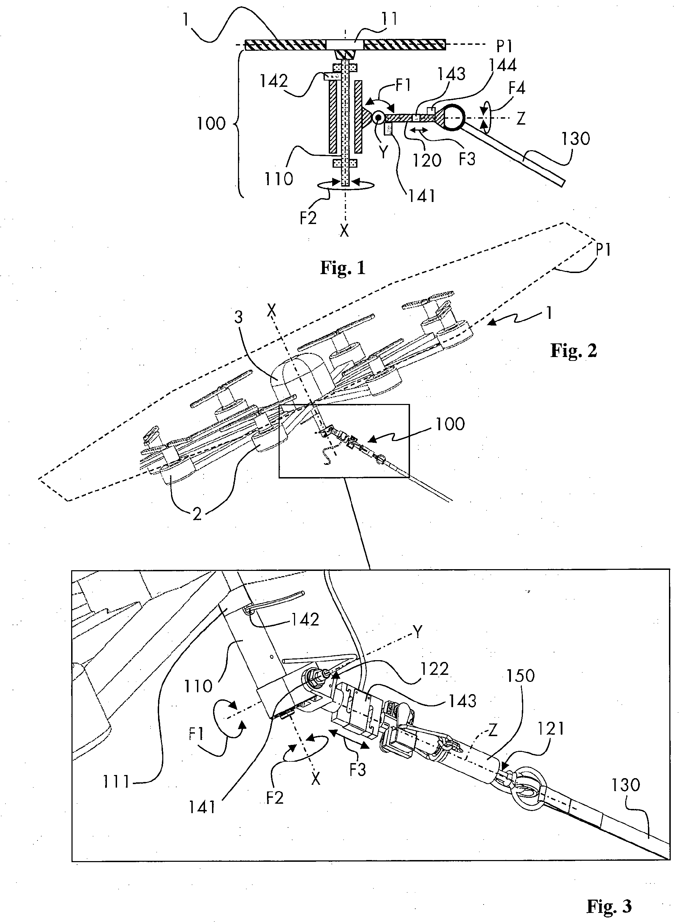

La figure 1 illustre un schéma de principe d'un aéronef à voilure tournante 1 muni d'un dispositif de remorquage 100 selon l'invention d'un aéronef sans moteur.

L'aéronef à voilure tournante 1 présente un plan P1 de rotation de la voilure tournante.

Le dispositif de remorquage 100 selon l'invention comprend :
- Un bras de fixation 110, présentant un axe longitudinal X, fixé à l'aéronef à voilure tournante 1 perpendiculairement au plan P1 de rotation de la voilure tournante ; et
- Un bras de traction 120, présentant un axe longitudinal Z, et dont une extrémité est reliée à un câble de traction 130, et une extrémité est montée sur le bras de fixation de manière pivotante de manière à présenter au moins un degré de liberté en rotation par rapport à l'aéronef à voilure tournante, autour d'un axe Y, dit « de tangage» du drone (flèche F1), perpendiculaire à l'axe longitudinal X du bras de fixation.

Selon l'invention, le dispositif de remorquage comprend un moyen de mesure (143) de force de traction exercée entre le câble et le bras de traction ; et un moyen de mesure de l'altitude relative des deux aéronefs.

La connaissance de la force de traction exercée entre le câble et le bras de traction, et de l'altitude relative du drone et du libériste est essentielle pour assurer un remorquage efficace et sûr du libériste, ce que permet le dispositif selon l'invention.

Différents moyens de mesure de force et de l'altitude relative des deux aéronefs peuvent être utilisés : des capteurs GPS différentiels, des capteurs inertiels, des capteurs télémétriques, des mesures de la puissance consommée par les moteurs, etc.

Cependant, une solution préférée consiste à munir le dispositif de remorquage de capteurs de force et de capteurs angulaires permettant de transmettre directement et rapidement à l'unité centrale du drone les données nécessaires à déterminer précisément la force de traction et l'altitude relative des aéronefs.

Par exemple, en connaissant l'angle formé entre l'axe longitudinal X du bras de fixation et l'axe longitudinal Z du bras de traction 120, l'unité centrale du drone selon l'invention est programmée pour calculer l'altitude relative à partir de la valeur angulaire mesurée par le capteur.

Bien entendu, l'homme du métier prendra en compte, lors de la programmation, les différents facteurs tels que la longueur déterminée du câble (qui pourrait avantageusement être une variable renseignée par l'utilisateur), et l'angle instantané du drone par rapport à l'horizontale (« l'assiette » du drone) c'est-à-dire l'angle entre l'horizontale et le plan de rotation de la voilure tournante ou, alternativement, l'angle formé entre l'axe longitudinal X du bras de fixation et la verticale.

L'avantage d'utiliser des capteurs angulaires et des capteurs de force à l'interface entre le drone et le câble est d'une part de connaître directement leurs positions relatives et la force de traction instantanée, mais également la rapidité et la précision de la mesure, au contraire de mesures indirectes (par exemple la mesure de la puissance consommée par les moteurs) ou de mesures de positions absolues à partir desquels la position relative doit être déduite.

Par exemple, l'utilisation de mesures GPS n'offre pas une fréquence de rafraîchissement suffisante pour connaître les positions relatives avec une précision satisfaisante.

Ainsi, selon un mode de réalisation avantageux de l'invention, le dispositif de remorquage comprend un capteur angulaire, dit « de tangage », d'angle de rotation 141 autour de l'axe de tangage Y du drone (flèche F1), ainsi qu'un capteur 143 de force de traction exercée entre le câble et le bras de traction (flèche F3).

Avantageusement, le bras de traction 120 est monté de manière pivotante par rapport à l'aéronef à voilure tournante selon au moins deux degrés de liberté en rotation autour de deux axes de rotation: le premier axe de tangage Y et un deuxième axe, dit « de lacet», parallèle et confondu avec l'axe longitudinal X du bras de fixation 110. Le dispositif de remorquage comprenant alors un deuxième capteur 142, dit « de lacet», d'angle de rotation du bras de traction autour de l'axe de lacet du drone X (flèche F2).

Comme illustré sur la figure 1, le bras de traction peut présenter également un troisième degré de liberté en rotation autour de son axe longitudinal Z (flèche F4) dit « de roulis» du drone, perpendiculaire aux axes X de lacet et Y de tangage, ainsi qu'un capteur associé 144, dit « de roulis», d'un angle de rotation autour de l'axe de roulis Z.

Dans tous ces modes de réalisation, les angles mesurés sont des angles relatifs : angle de tangage relatif entre le drone et le câble de traction, angle de lacet relatif entre le drone et le câble de traction. Il conviendra donc de prendre en compte dans les calculs la position du drone par rapport à la verticale ou à l'horizontale (inclinaison et assiette du drone).

Ces capteurs transmettent en temps réel des mesures d'angles et de force de traction à l'unité centrale 10 du drone 1, qui est programmée pour adapter son vol (cap, altitude, vitesse) en fonction de ces mesures afin, par exemple, d'éviter un phénomène de verrouillage du parapente. Ainsi, en cas de rafale de vent déportant le parapente latéralement, le drone détecte un changement d'angle anormal et adapte son vol pour retrouver un angle de traction conforme avec le parapente.

Un exemple de réalisation détaillé est illustré aux figures 2 et 3.

La figure 2 illustre un drone octocoptère 1 muni de huit rotors 2 répartis régulièrement autour de l'axe de symétrie X du drone. Les rotors sont agencés de manière que les huit hélices se trouvent sur un même plan P1 constituant le plan de rotation de la voilure tournante.

Le drone comprend également un corps 3 comprenant, notamment, une unité centrale 11 programmée pour faire voler le drone et transmettre et recevoir des signaux de commande.

Un dispositif de remorquage 100 selon l'invention est fixé sous le drone 1, c'est-à-dire sous le plan P1 de rotation de la voilure tournant par rapport à la position d'utilisation. Avantageusement, le dispositif de remorquage 100 est fixé au centre du drone 1, sur l'axe de symétrie X du drone, pour ne pas inutilement déséquilibrer ce dernier pendant le vol.

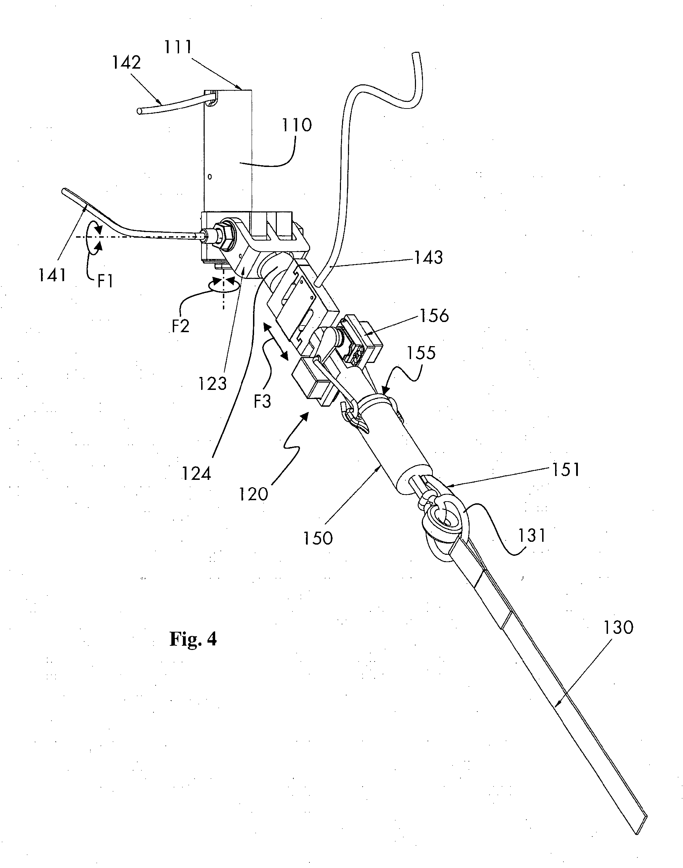

Comme illustré plus en détail en figures 3 et 4, le dispositif de remorquage 100 comprend un bras de fixation 110 à l'aéronef à voilure tournante, présentant un axe longitudinal X et muni d'un organe de fixation 111 destiné à être fixé à un organe de fixation complémentaire (non visible) de l'aéronef 1. En position d'utilisation, l'arbre de fixation est fixé perpendiculairement au plan de rotation P de la voilure tournante.

Le dispositif de traction 100 comprend également un bras de traction 120, présentant un axe longitudinal Z, et dont une extrémité 121 est reliée au câble 130 de traction de l'aéronef sans moteur. L'autre extrémité 122 de l'arbre de traction 120 est montée sur le bras de fixation 110 de manière pivotante autour d'un axe Y perpendiculaire à l'axe longitudinal X du bras de fixation 110.

Selon un mode de réalisation préféré de l'invention, l'agencement du dispositif de remorquage est tel que le bras de traction 120 dispose de deux degrés de liberté en rotation par rapport à l'aéronef à voilure tournante selon l'axe X de lacet du drone et selon l'axe Y de tangage du drone.

Ceci peut être obtenu soit parce que le bras de fixation est fixé au drone 1 de manière rotative autour de son axe longitudinal X (par exemple par une bague rotative) et parce que le bras de traction 120 est monté pivotant autour de l'axe de rotation Y sur l'arbre de fixation 110 (par exemple par une bielle 123), soit parce que l'arbre de traction est monté pivotant sur l'arbre de fixation selon deux axes de rotation X et Y perpendiculaires entre eux (par exemple à l'aide d'une rotule).

Selon l'invention, le dispositif de remorquage comprend également:
- un premier capteur 141, dit «de tangage », d'angle de rotation (flèche F1) du bras de traction autour de l'axe Y, dit « de tangage », perpendiculaire à l'axe longitudinal X du bras de fixation ;
- un deuxième capteur 142, dit «de lacet», d'angle de rotation (flèche F2) du bras de traction autour de l'axe longitudinal X du bras de fixation ;
- un capteur 143 de force de traction exercée entre le câble 130 et le bras de traction 120 (flèche F3).

Les deux capteurs d'angle de rotation 141 et 142 permettent au drone 1 de connaître à chaque instant sa position respective avec le parapente.

Avantageusement, le câble de traction 130 est destiné à être fixé à une extrémité du bras de traction par un dispositif de largage commandable 150 apte à libérer sur commande le câble de traction 130 du bras de traction en cas de danger.

Bien entendu, en fonctionnement normal, comme il sera décrit par la suite, le largage se fait au niveau du parapente par le libériste lui-même, au moment où il le choisit. Ainsi, l'extrémité du câble fixée au libériste comprend également un dispositif de largage. Ce dernier peut être manuel ou commandable à distance par le pilote du drone, comme pour le dispositif de largage commandable 150 situé à l'extrémité du bras de traction du dispositif de remorquage selon l'invention.

Selon l'invention, le dispositif de largage commandable 150 comprend :
- Un organe de fixation réversible 151 du câble de traction 130;
- Un organe de déverrouillage 155 en prise avec l'organe de fixation 151 pour déverrouiller l'organe de fixation et libérer le câble de traction de l'organe de fixation.
- Au moins une servocommande 156 apte à actionner l'organe de déverrouillage sur commande de l'unité centrale de l'aéronef à voilure tournante en position d'utilisation.

Selon le mode de réalisation préféré, l'organe de fixation réversible 151 est un crochet, en forme de virgule, monté pivotant librement autour d'un oeillet 152 fixé à une barre de fixation 153. Le crochet 151 comprend un trou borgne 154 à son extrémité libre 151a.

La barre 153 est solidaire d'un organe de déverrouillage 155 muni d'au moins une servocommande 156 en prise avec une première extrémité d'un manchon 157 par une tringlerie 158, et apte à translater le manchon 157 sur commande de l'unité centrale de l'aéronef à voilure tournante en position d'utilisation.

Ce manchon 157 est monté coulissant le long de la barre de fixation 153 et comprend à une seconde extrémité une goupille 159 parallèle à la barre de fixation 153, et destinée à s'engager par coulissement dans le trou borgne 154 du crochet 151.

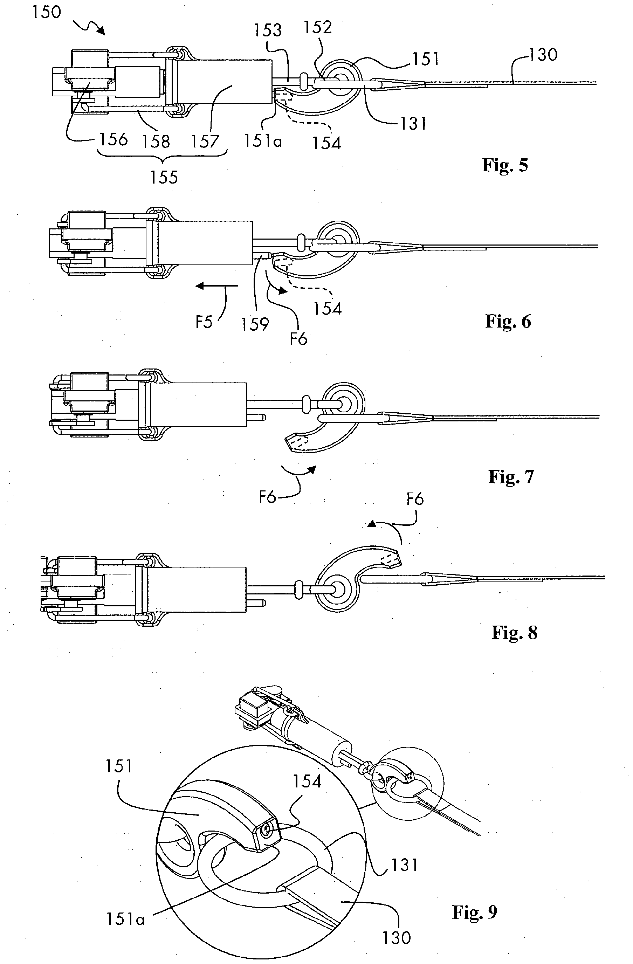

La figure 5 illustre la position de verrouillage dans laquelle le crochet 151 est enroulé autour de l'anneau d'extrémité 131 du câble 130 et bloqué dans cette position par la goupille 159 insérée dans le trou borgne 154 du crochet 151. Autrement dit, dans cette position, le manchon 157 est au plus proche du crochet 151.

Lorsque le télépilote (ou le libériste) commande le décrochage d'urgence, la ou les servocommandes sont activées et tirent sur le manchon 157 qui coulisse le long de la barre de fixation 153 dans le sens de la flèche F5. La goupille 159 coulisse alors dans le trou borgne 154 dans le même sens que la flèche F5 jusqu'à ce que la goupille sorte du trou borgne 154 (figures 6 et 7), ce qui libère le crochet 151 qui commence à pivoter dans le sens de la flèche F6, du fait de la traction exercée par le câble 130 et le libériste.

En figure 8, illustrant la position de largage, le crochet 151 a totalement pivoté selon la flèche F6 et le câble 130 est libéré.

La figure 9 est une vue sous un autre angle de la position de largage de la figure 8, et qui illustre la structure de l'extrémité 151a du crochet 151 qui comprend le trou borgne 154 dans lequel coulisse la goupille 159 solidaire du manchon 157 lors du largage.

Dans un mode de réalisation préférentiel, le dispositif de largage comprend un fusible mécanique (non illustré) calibré pour commander le dispositif de largage et libérer le câble de traction de l'organe de fixation lorsqu'une condition mécanique est rencontrée. Par exemple, le fusible mécanique peut rompre si la force de traction mesurée par le capteur 143 dépasse accidentellement une valeur limite haute.

Outre le pivotement selon les axes de tangage Y et de lacet X, l'arbre de traction 120 peut également être monté rotatif autour de son axe longitudinal de roulis Z. Par exemple, le bras de traction 120 comprend entre la bielle 123 et le capteur de traction 143 un moyen de découplage en rotation autorisant la libre rotation de l'arbre autour de l'axe Z. Ce moyen de découplage en rotation peut être, par exemple un palier 124.

Dans ce cas, le bras de traction 120 comprend un troisième capteur, dit « de roulis », d'un angle de rotation autour de l'axe longitudinal du bras de traction (non illustré).

D'une manière générale, dans un premier mode de réalisation, les capteurs comprennent chacun un émetteur muni d'une antenne programmé pour transmettre les signaux par liaison sans fil à l'unité centrale de l'aéronef à voilure tournante.

Dans un mode de réalisation préféré, les capteurs sont reliés par liaison filaire à l'organe de fixation 111 du bras de fixation 110, cet organe de fixation comprenant un contact électrique destiné à être en contact avec un contact électrique correspondant sur l'aéronef de sorte qu'en position d'utilisation, les capteurs 141, 142, 143 et 144 puissent transmettre les signaux par liaison filaire à l'unité centrale de l'aéronef à voilure tournante.

La liaison filaire évite un éventuel risque de brouillage et/ou une déconnexion avec l'aéronef en cas de perte de signal radio.

Les contacts électriques peuvent également servir à l'alimentation électrique du dispositif de remorquage selon l'invention.

Alternativement, l'alimentation électrique du dispositif et la transmission filaire des capteurs peuvent être indépendantes des organes de fixation et se trouver sur une ou plusieurs prises distantes dédiées.

L'invention propose également un aéronef à voilure tournante comprenant un moyen de fixation d'un dispositif de remorquage selon l'invention, tel que le bras de fixation est perpendiculaire au plan de rotation de la voilure tournante. Il peut s'agir, par exemple, d'un orifice taraudé dans lequel doit s'insérer une tige filetée portée par une extrémité du bras de fixation. Inversement, il peut s'agir d'un axe fileté sur lequel vient se visser une bague taraudée solidaire du bras de fixation du dispositif de remorquage.

De préférence, le moyen de fixation choisi est apte à assurer un positionnement précis et reproductible du dispositif de remorquage. Il peut avantageusement être combiné à un second moyen de verrouillage pour éviter une déconnexion accidentelle.

Avantageusement, le moyen de fixation sur l'aéronef à voilure tournante comporte un contact électrique relié à l'unité centrale afin de transmettre par liaison filaire des informations issues des capteurs du dispositif de remorquage à l'unité centrale, lorsque le dispositif de remorquage est fixé à l'aéronef à voilure tournante (position d'utilisation).

L'aéronef selon l'invention comprend une unité centrale programmée pour commander la voilure tournante en réponse à des signaux transmis par les capteurs du dispositif de remorquage.

En effet, chacun des deux aéronefs (parapente et drone) ayant ses propres portance, traînée et vitesse, voit son régime de vol modifié sous l'effet de la traction du câble qui les relie. Il en résulte une force de traction -transmise par le câble- exercée d'un aéronef sur l'autre. L'amplitude de cette force peut varier en fonction des instabilités de la masse d'air et la direction de cette force peut varier en fonction de la position relative des deux aéronefs dans l'espace.

Cette force de traction multidimensionnelle se traduit par un vecteur force (amplitude et direction) par rapport au drone tracteur.

Le recours à un aéronef sans pilote (drone) muni d'un dispositif de remorquage selon l'invention permet de mettre en place un asservissement qui adapte en temps réel le vecteur force transmis par le câble à l'aéronef tracté. En effet, et particulièrement pour un drone tracteur à voilure tournante de type quadricoptère, hexacoptère, octocoptère (ou tout autre aéronef à voilure tournante tel que des drones à birotors contrarotatifs par exemple), le drone pourra adapter rapidement sa force de traction, car il n'a pas besoin de vitesse horizontale pour assurer sa sustentation.

A contrario, les aéronefs tracteurs conventionnels (avion, ULM) doivent constamment privilégier leur sustentation en ajustant leur vitesse de vol au détriment de la qualité du service de force de traction (oscillations pouvant être brutales et dangereuses pour le libériste).

Le dispositif de remorquage selon l'invention fixé au drone tracteur reçoit le câble de traction relié à l'aéronef tracté et permet de connaître en temps réel la position relative de l'aéronef tracté, en altitude et en cap ainsi que la force de traction. Le drone est programmé pour adapter dynamiquement son vol (cap, force de traction, altitude) pour assurer une prise d'altitude en toute sécurité et de manière confortable pour le libériste.

Dans cette utilisation du drone selon l'invention, le référentiel de vol du drone n'est pas le sol, comme pour les drones connus, mais la masse d'air qui porte l'aéronef tracté. Ainsi le drone tracteur peut asservir l'effort de traction, et accorder son régime de vol par rapport à l'aéronef tracté. Il peut également effectuer des corrections de cap. Il optimise ainsi la constance du régime de vol de l'ensemble tracteur-tracté et ainsi la sécurité de l'usager. Il peut en particulier optimiser le régime de vol en mode de finesse maximum du parapente, ce qui optimise la vitesse ascensionnelle et est ainsi propice à une prise d'altitude rapide et sereine.

Ainsi, à l'inverse d'un aéronef avec pilote embarqué, la masse du tracteur au regard du tracté est plus faible, ce qui apporte un avantage significatif en limitant les efforts dynamiques et donc les chocs sur le tracté. Le drone tracteur peut s'adapter très rapidement et amortir les éventuelles oscillations grâce à sa masse réduite et sa capacité à changer de régime de vol très rapidement en fonction des informations de mesure transmises par le dispositif de remorquage selon l'invention et prises en compte par le calculateur de l'unité centrale du drone.

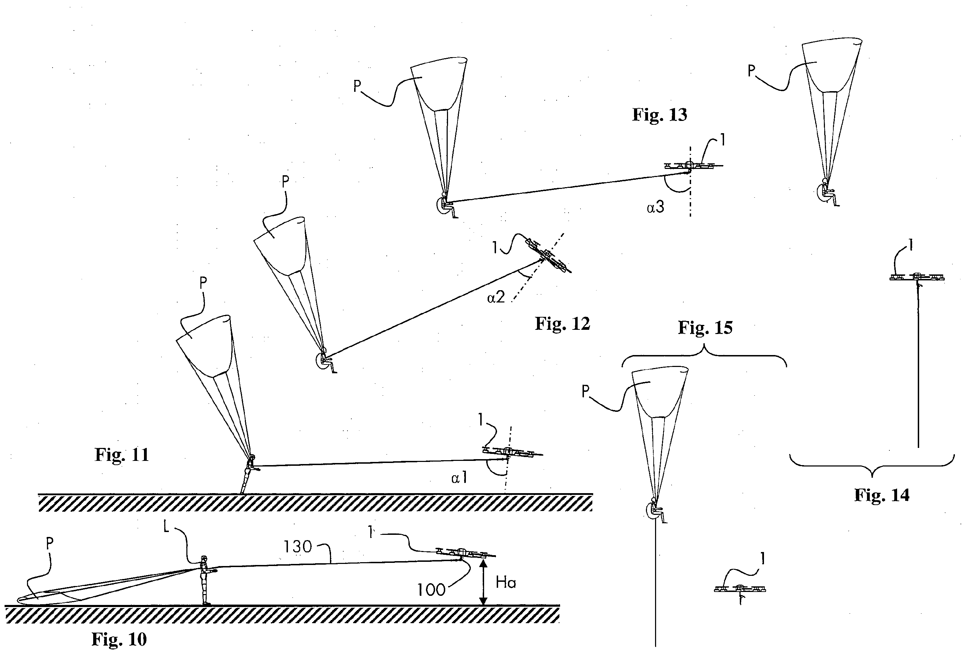

La mise en oeuvre du dispositif de remorquage et de l'aéronef à voilure tournante selon l'invention est illustrée aux figures 10 à 15. Ces figures illustrent la préparation (figure 10), le décollage (figure 11), et l'ascension (figure 12) d'un libériste L muni d'un parapente P. La figure 13 illustre la préparation au largage du câble de remorquage, et les figures 14 et 15 illustrent deux modes de réalisation du largage du câble.

Les différentes phases sont gérées par l'unité centrale du drone qui est programmée pour exploiter les données transmises par le dispositif de remorquage selon l'invention.

Le procédé de remorquage d'un aéronef sans moteur selon l'invention commence donc par la fourniture d'un aéronef à voilure tournante sans pilote embarqué 1 de puissance adaptée, muni d'un moyen de fixation pour un dispositif de remorquage 100 selon l'invention. Une fois fixé sur l'aéronef à voilure tournante, le bras de fixation est perpendiculaire au plan de rotation de la voilure tournante.

On fixe ensuite une extrémité d'un câble de traction 130 à une extrémité du bras de traction 120 du dispositif de traction 100, l'autre extrémité du câble de traction 130 étant destinée à être fixée au pilote L du parapente P.

Le drone adapté au besoin doit pouvoir produire une force de poussée telle que la résultante des forces aérodynamiques exercées sur l'ensemble volant (portance, trainée, poids et poussée) soit orientée vers le haut. Ainsi l'aéronef tracté pourra gagner en altitude pendant la phase de traction.

Calcul simplifié de la poussée nécessaire à la sustentation du drone : la force de trainée et la force de portance du drone peuvent être négligées, car le drone est considéré dans le calcul en régime de vol stationnaire. Le drone doit donc vaincre son propre poids,-par exemple 25 Kg ; il prélèvera donc une poussée d'environ 25 daN sur ses moteurs à cet effet.

Calcul simplifié de la poussée nécessaire à la sustentation de l'aéronef tracté lors du vol en palier: la portance et le poids de l'aéronef tracté s'annulent, ainsi dans le cas d'un parapente de poids total en vol de 100 Kg (avec le libériste) et de finesse égale à 5, c'est la seule force de trainée qui est directement prélevée sur la force de < poussée du drone soit 20 daN.

Ainsi, le drone doit produire une force de poussée d'au moins 45 daN pour seulement assurer la sustentation de l'ensemble volant (en vol en palier, la résultante des forces aérodynamiques de l'ensemble volant est nulle). Toute force de poussée supplémentaire fournie par les moteurs du drone permet alors à l'ensemble volant de gagner en altitude, ce qui est l'objectif recherché.

Pour estimer la force de poussée supplémentaire nécessaire, on considère que si l'on applique une force de poussée supplémentaire égale en valeur à la force de poussée nécessaire pour vaincre la force de traînée (ici 20 daN), l'ensemble volant passe d'un régime de vol stationnaire à un régime de vol ascendant dont la vitesse de montée verticale égale la vitesse de descente verticale de l'ensemble sans moteur. Par symétrie de la mécanique de vol, on estime ainsi à 20 daN la force de poussée supplémentaire nécessaire à la montée de l'ensemble.

Enfin, il est préférable d'ajouter une marge de poussée d'environ 15 % pour permettre la régulation de la traction par l'unité centrale du drone soit 10 daN.

On obtient alors une estimation de la force de poussée totale nécessaire de 75 daN, pour cet exemple.

Il convient donc de choisir de manière adaptée les composants du drone (hélices, moteurs, contrôleurs de puissance et batteries) pour qu'il soit capable de produire une force de poussée d'au moins 75 daN.

Le dispositif de remorquage selon l'invention permet de remorquer un aéronef sans moteur grâce à un drone pour lui permettre de s'envoler depuis n'importe quel endroit dégagé.

Pour préparer son envol, le libériste L place sa voile à terre suivant le procédé habituel en se plaçant face au vent, le drone étant à terre. Le libériste accroche une extrémité du câble 130 à un largueur qu'il porte sur sa sellette, l'autre extrémité étant fixée au largueur commandable 150 du dispositif de remorquage selon l'invention.

Le libériste signale au télépilote du drone qu'il est prêt à décoller et le télépilote envoie le signal de commande au drone tracteur pour qu'il se place dans un mode dit « d'attente » illustré en figure 10. Pour cela, il commande un décollage vertical de l'aéronef à voilure tournante à une hauteur Ha dite « d'attente », en vol stationnaire. Cette commande est soit directe, soit préprogrammée de sorte que le drone se place automatiquement en vol stationnaire à la hauteur Ha.

Cette hauteur d'attente est comprise entre 40 cm et 250 cm, de préférence environ 100 cm.

Concomitamment ou successivement, il commande un déplacement horizontal de l'aéronef pour obtenir une valeur de force de traction, calculée par l'unité centrale de l'aéronef à partir des mesures fournies par les capteurs du dispositif de traction, comprise entre une valeur nulle et une valeur seuil dite « de pré tension » suffisante pour tendre le câble de traction sans déstabiliser le libériste.

Ce mode d'attente génère une force de traction faible sur le libériste L, la vitesse de rotation de la voilure tournante étant asservie sur la force de traction et l'angle mesurés par le dispositif.

La vitesse de la voilure tournante étant asservie aux valeurs d'angle α1 et de traction mesurées par les capteurs du dispositif de remorquage selon l'invention, le mode « d'attente » peut être préprogrammé, de sorte que le télépilote ne fait que sélectionner ce mode sur sa télécommande, le détail de la procédure étant géré automatiquement par l'unité centrale du drone.

À partir de cette position, le libériste prend seul la décision de gonfler sa voile, exactement comme s'il se lançait du haut d'une pente, c'est-à-dire en tirant sur les suspentes avant du parapente et en amorçant une course vers l'avant.

La vitesse de la voilure tournante étant asservie aux valeurs d'angle α1 et de traction mesurées par les capteurs du dispositif de remorquage selon l'invention, le drone avance automatiquement pour maintenir une valeur de traction de pré tension et accompagner le mouvement du libériste.

La voile se place alors au-dessus du libériste L qui est ainsi prêt à décoller, comme illustré en figure 11.

Dans un mode de réalisation préféré, à l'issue du gonflage, où le drone maintient une traction de quelques daN, le libériste commence à courir et le drone détecte et accompagne ce mouvement. Le télépilote contrôle alors la bonne tenue de la voile au-dessus du libériste et lance le drone tracteur en mode décollage. Le libériste continue sa course vers l'avant pour accompagner naturellement le drone et décoller en quelques pas.

Le télépilote commande un déplacement horizontal et vertical de l'aéronef pour obtenir une valeur de force de traction, calculée par l'unité centrale de l'aéronef à partir des mesures fournies par les capteurs du dispositif de traction, comprise entre la valeur seuil de pré tension et une valeur seuil dite « de remorquage » suffisante pour faire décoller l'aéronef sans moteur et le remorquer jusqu'à une altitude de largage. Au cours de cette étape, la commande de déplacement horizontal et vertical est obtenue en augmentant progressivement la vitesse de rotation de la voilure tournante. Cette phase critique du décollage nécessite en effet une montée en puissance progressive et contrôlée pour une prise d'altitude de l'ensemble avec un maximum de sécurité pour le libériste.

Très rapidement, grâce à la portance de la voile, le pilote décolle, s'assoit dans sa sellette, et dirige son parapente, comme illustré en figure 12.

Il passe en régime de vol remorqué par le drone : il prend de l'altitude en position « bras hauts » pour limiter l'incidence de la voile et contrôle son cap pour conserver la force de traction perpendiculaire à sa voile dans le plan horizontal.

Le télépilote peut décider d'une prise de virage large pour conserver l'ensemble drone + parapente/pilote à vue et à portée du terrain d'atterrissage.

Au cours de cette phase, le drone tracteur recherche le régime de vol dit de « finesse maxi » de l'aéronef tracté afin d'optimiser la prise d'altitude. La force de traction et l'angle de traction α2 sont asservis selon le mode de vol optimal (vitesse air) correspondant aux caractéristiques de l'aéronef sans moteur remorqué.

Pendant la montée, le libériste L accompagne la trajectoire du drone tracteur 1 et surveille le terrain d'atterrissage qu'il doit pouvoir rejoindre sans difficulté si la traction devait disparaître (largage d'urgence ou rupture du câble).

Une fois le libériste arrivé à une altitude de largage satisfaisante, le télépilote (ou le libériste) initie la phase de largage, illustrée en figure 13 en envoyant une commande au drone.

Elle consiste à commander un déplacement horizontal et vertical de l'aéronef déterminé pour obtenir une valeur de force de traction, calculée par l'unité centrale de l'aéronef à partir des mesures fournies par les capteurs du dispositif de traction, sensiblement égale à une valeur seuil dite « de largage ».

Cette valeur de largage est inférieure à la valeur de remorquage et vise simplement à diminuer la tension du câble entre le drone tracteur et l'aéronef sans moteur.

Le télépilote ou le drone adapte progressivement le régime de vol en traction dite « de largage » et le libériste peut alors déclencher son largueur en douceur, sans déclencher une importante abattée du parapente.

La vitesse de la voilure tournante étant asservie aux valeurs d'angle α3 et à la mesure de traction de largage mesurées par les capteurs du dispositif de remorquage selon l'invention, un mode « largage » peut être préprogrammé, de sorte que le télépilote (ou le libériste) ne fait que sélectionner ce mode sur sa télécommande, le détail de la procédure étant géré automatiquement par l'unité centrale du drone.

Cette situation de largage normale est illustrée en figure 14 : le câble est décroché de l'aéronef sans moteur et reste accroché à l'aéronef à voilure tournante.

Dans certains cas et pour la sécurité des opérations, il est nécessaire de prévoir un largage d'urgence. Ce dernier est permis par le dispositif de largage commandable 150 du dispositif de remorquage selon l'invention.

Selon l'urgence de la situation, le drone tracteur passe préalablement ou pas en traction réduite. Le largage d'urgence peut être déclenché par le télépilote, par le drone lui-même dans le cas d'une réserve de batterie jugée critique par exemple, ou par le fusible mécanique. En cas de défaillance il est pertinent de conserver la possibilité de libérer d'urgence et sans condition le drone tracteur.

Le dispositif de largage commandé 150 décroche ainsi le câble du dispositif de remorquage et donc du drone, le câble restant accroché à l'aéronef sans moteur, comme illustré en figure 15.

Le drone tracteur est libéré et le libériste contrôle l'abattée de son parapente par une action d'accompagnement sur les deux freins.

Le télépilote reprend immédiatement le contrôle du drone.

Le pilote du parapente peut choisir de décrocher également le câble de son côté pour ne pas être gêné pendant le vol et l'atterrissage.

Après le largage, le procédé selon l'invention comprend une étape de commande d'un retour de l'aéronef à voilure tournante selon une trajectoire de sécurité et d'un atterrissage à une position géographique déterminée.

Juste après le largage, la force de traction mesurée est nulle, et le drone peut être programmé soit pour se mettre en vol de dégagement (selon une trajectoire évitant la trajectoire du parapente, par exemple une trajectoire très latérale) dans l'attente d'une commande envoyée par le télépilote, soit pour retourner automatiquement à l'aire de décollage selon une trajectoire de sécurité visant à éviter de percuter le libériste et son parapente. Bien entendu, ce retour peut être contrôlé uniquement par le télépilote.

Avantageusement, le drone et le/chaque pilote sont munis d'un système anticollision.

Par exemple, le pilote de chaque parapente ayant été remorqué par le drone selon l'invention comprend un émetteur de signal capable d'être détecté par le drone, de sorte que ce dernier est programmé pour voler à une distance supérieure à une distance de sécurité prédéfinie de l'émetteur. Ainsi, le drone évite tous les libéristes en vol lorsqu'il retourne à l'aire de décollage. Il peut également adapter automatiquement sa trajectoire de remorquage s'il détecte un signal à proximité.

Le système anticollision peut utiliser les signaux GPS du drone et du smartphone de chaque pilote, par exemple.

Alternativement ou en combinaison, le drone peut être muni de capteurs optiques (caméras, lasers) ou acoustiques (capteur de télémétrie à ultrasons par exemple) afin de détecter par stéréoscopie la présence de tout autre aéronef évoluant à visibilité afin de conserver une distance de sécurité avec eux.

Bien entendu, toute autre technologie permettant la navigation autonome d'un drone dans un environnement dynamique peuplé d'autres objets en vol peut être utilisée.

Le télépilote assure la sécurité du vol de retour du drone jusqu'à son retour à la verticale du lieu d'atterrissage.

Une fois que le drone est posé, il est prêt à repartir avec un autre libériste ou à subir une opération de maintenance (comme le changement des batteries).

Même si l'objectif principal de la présente invention est la prise d'altitude puis le largage du libériste, le drone et le dispositif de remorquage selon l'invention peuvent être utilisés pour remorquer l'aéronef sans moteur jusqu'à une aire d'atterrissage. Un tel mode peut, par exemple, être avantageusement utilisé pour des baptêmes de vol ou pour enseigner le vol à des élèves qui ne sont pas encore autonomes.

Ce mode, dit « de descente » nécessite une réduction de la force de traction. L'ensemble pilote/parapente a alors tendance à perdre naturellement de l'altitude, le télépilote contrôlant le cap.

Le pilotage du drone tracteur est alors comparable au pilotage d'un drone classique, mais le drone tracteur selon l'invention continue de réguler sa position relative avec l'aéronef sans moteur par une force de traction et des angles adaptés automatiquement.

L'ensemble des deux aéronefs reliés par le dispositif de remorquage selon l'invention permet de fonctionner suivant différents modes de vol : un mode assisté, décrit précédemment, dans lequel le drone est piloté depuis le sol par un télépilote, et un mode autonome, dans lequel le drone est piloté par le libériste lui-même.

En mode assisté, le dispositif permet au télépilote de transmettre des consignes de cap que le drone tracteur suit tout en assurant la régulation du mode de vol choisi. Dans ce mode de vol contrôlé par le télépilote, le libériste se limite à contrôler son cap en suivant le drone tracteur, ce dernier s'orientant sur son axe de lacet et de tangage dans la direction de la trajectoire indiquée par le télépilote. L'information angulaire sur l'axe du lacet du drone tracteur permet de contrôler le rayon du virage en l'augmentant dans le cas où le libériste effectuerait des commandes contradictoires (afin d'assurer sa sécurité).

En mode autonome, le dispositif peut aussi offrir la possibilité à un libériste confirmé de piloter l'ensemble naturellement, avec les commandes de son parapente. Le drone muni de dispositif de remorquage selon l'invention peut être programmé pour interpréter les mouvements commandés par le libériste sur son parapente et orienter sa trajectoire et son altitude en conséquence. Par exemple, une traction sur le frein gauche change la mesure de l'angle de lacet du drone tracteur par rapport au câble, le drone peut ainsi être programmé pour corriger son vol et faire cap sur la gauche jusqu'au rétablissement de l'angle de lacet adapté.

Ce mode de pilotage donne l'autonomie du vol au libériste. Son fonctionnement est donc contradictoire avec le mode assisté. Le mode de vol doit donc être choisi au préalable.

De préférence, pour des raisons de sécurité, même lorsque le mode autonome est sélectionné, le télépilote doit pouvoir reprendre la main sur le mode de vol en cas de problème.

La détermination par le drone des angles de traction par rapport au lacet ou au tangage permet d'envisager un contrôle du cap soit par le libériste lui-même soit par le télépilote en fonction du mode de pilotage choisi et de la « hiérarchie des pouvoirs ».

Le dispositif de remorquage selon l'invention permet une mise en oeuvre du décollage et du remorquage de l'aéronef sans moteur plus ou moins automatisée.

Par exemple, à un degré d'automatisation faible, les données mesurées par le drone sont simplement envoyées au télépilote qui adaptera en conséquence la trajectoire du drone et la puissance des moteurs.

Mais le dispositif selon l'invention permet d'automatiser beaucoup plus le décollage et le remorquage de l'aéronef sans pilote grâce à l'unité centrale du drone qui peut être programmée pour adapter automatiquement la trajectoire du drone et la puissance des moteurs en fonction des données transmises par les capteurs du dispositif.

Par exemple, dans un degré d'automatisation intermédiaire, les différentes phases de vol (gonflage de la voile, décollage, remorquage, largage et retour au point de décollage) peuvent être programmées individuellement et sélectionnables par le télépilote.

Dans un degré d'automation supérieur, le télépilote active simplement le drone qui va gérer tout seul toutes les phases du vol.

Bien entendu, il est préférable pour des raisons de sécurité et de responsabilité que l'unité centrale du drone soit programmée pour permettre une prise en main forcée par le télépilote, quel que soit le degré d'automatisation.

Le procédé de remorquage décrit précédemment peut être plus succinctement ou plus complètement automatisé selon les souhaits de l'homme du métier et/ou la réglementation en vigueur et/ou l'application envisagée.

Ainsi, l'unité centrale d'un drone classique comprend plusieurs « couches » logicielles qui gèrent les moteurs :
- Une couche basse que l'on pourrait qualifier de réflexe qui gère l'auto stabilité du drone basé sur les informations du capteur 3 axes à inertie communiquées avec une base de temps très rapide :
   ∘ L'axe de tangage, régulé sur la répartition des hélices avant/arrière
   o L'axe de roulis, régulé sur la répartition des hélices Gauche/Droite
   o L'axe de lacet, régulé sur la répartition des hélices en diagonale

Ce fonctionnement permet à un drone de rester en mode stationnaire même s'il y a du vent.
- Une couche médiane qui permet de suivre un plan de vol (au GPS) et qui communique les consignes à la couche basse avec une base de temps bien plus lente ;
- Une couche supérieure qui, en addition, permet au télépilote de donner des consignes supplémentaires faisant sortir le drone de son plan de vol de pivoter sur lui-même etc...

L'invention propose donc d'ajouter une couche logicielle intermédiaire permettant un pilotage plus ou moins automatique, contrôlant le drone en mode traction (intermédiaire, car le télépilote, c'est-à-dire la couche logicielle supérieure, reste maître)

La couche logicielle intermédiaire joue sur trois commandes : la poussée, le tangage et le roulis grâce aux données transmises par le dispositif de remorquage selon l'invention concernant la force le long de l'axe Z, l'angle autour de l'axe X de lacet et l'angle autour de l'axe Y de tangage.

Le dispositif et le drone selon l'invention peuvent également être appliqués au remorquage d'une voile de traction d'un bateau.

En effet, certains navires de transport maritime tendent à utiliser des voiles de traction pour diminuer leur consommation de pétrole. Le lancement de ces voiles nécessite le lancement de voiles plus petites, dites «voiles d'élévation » qui vont tirer des voiles de plus en plus grosses.

Cependant, le lancement de ces voiles est une opération critique qui nécessite un savoir-faire important et une coordination entre le lanceur et le pilote du bateau. En outre, il peut être très difficile de maîtriser la voilure lorsqu'elle comprend plusieurs voiles de différentes tailles reliées les unes aux autres en série.

L'utilisation d'un drone muni d'un système de remorquage selon l'invention résout ces problèmes en permettant le décollage d'une voile unique, c'est-à-dire sans voile d'élévation.

Le dispositif et le drone selon l'invention peuvent également être appliqués à la dépose d'un textile de protection contre le gel sur des cultures fragiles comme des vignes ou les vergers.

En effet, lors de gelées de printemps, les agriculteurs sont souvent confrontés à la problématique de couvrir très rapidement leurs vignes. L'utilisation d'un drone selon l'invention équipé d'un dispositif de remorquage selon l'invention peut apporter une grande aide, car le textile, dans ce cas d'une très grande surface, se comportera comme un aéronef et non comme un poids mort.

## Revendications

1. Dispositif de remorquage (100) d'un aéronef sans moteur (P) par un aéronef à voilure tournante sans pilote embarqué (1) comprenant une unité centrale de commande (11) et un plan (P1) de rotation de la voilure tournante, le dispositif de remorquage comprenant:
- Un bras de fixation (110) à l'aéronef à voilure tournante, présentant un axe longitudinal (X) dit de «lacet » et muni d'un organe de fixation (111) destiné à être fixé à un organe de fixation complémentaire de l'aéronef, perpendiculairement au plan de rotation de la voilure tournante, en position d'utilisation ; et
- Un bras de traction (120), présentant un axe longitudinal (Z) dit de «roulis », et dont une extrémité est destinée à être reliée à un câble de traction (130) de l'aéronef sans moteur et une extrémité est monté sur le bras de fixation de manière pivotante de manière à présenter au moins un degré de liberté en rotation par rapport à l'aéronef à voilure tournante, autour d'un axe (Y), dit «de tangage», perpendiculaire à l'axe longitudinal (X) du bras de fixation,
le dispositif de remorquage comprenant en outre:
• un moyen de mesure (143) de force de traction exercée entre le câble et le bras de traction ; et
**caractérisé en ce que** le dispositif de remorquage comprend
• un moyen de mesure d'une altitude relative des deux aéronefs.

2. Dispositif de remorquage selon la revendication 1, dans lequel le moyen de mesure de force de traction est un capteur de force (143), et le moyen de mesure de l'altitude relative comprend un capteur angulaire (141), dit « de tangage », d'angle de rotation du bras de traction autour de l'axe de tangage.

3. Dispositif de remorquage selon la revendication 2, dans lequel le bras de traction est monté de manière pivotante par rapport à l'aéronef à voilure tournante selon au moins deux degrés de liberté en rotation autour de deux axes de rotation : le premier axe de tangage (Y) et un deuxième axe, dit « de lacet», parallèle à l'axe longitudinal (X) du bras de fixation, le dispositif de remorquage comprenant un deuxième capteur angulaire (142), dit «de lacet», d'angle de rotation du bras de traction autour de l'axe de lacet.

4. Dispositif de remorquage selon la revendication 3, dans lequel le bras de traction est monté de manière pivotante par rapport à l'aéronef à voilure tournante selon trois degrés de liberté en rotation autour de trois axes de rotation : le premier axe de tangage (Y), le deuxième axe de lacet (X), et un troisième axe (Z), dit « de roulis » parallèle à l'axe longitudinal du bras de traction, le dispositif de remorquage comprenant un troisième capteur (144), dit « de roulis», d'un angle de rotation autour de l'axe de roulis.

5. Dispositif de remorquage selon l'une quelconque des revendications 1 à 4, dans lequel le câble de traction est fixé à une extrémité du bras de traction par un dispositif de largage commandable (150) apte à libérer le câble de traction du bras de traction.

6. Dispositif de remorquage selon la revendication 5, dans lequel le dispositif de largage comprend :
- Un organe (151) de fixation réversible du câble de traction ;
- Un organe de déverrouillage (152) en prise avec l'organe de fixation pour déverrouiller l'organe de fixation et libérer le câble de traction de l'organe de fixation ;
- Au moins une servocommande (153) apte à actionner l'organe de déverrouillage sur commande de l'unité centrale de l'aéronef à voilure tournante en position d'utilisation.

7. Dispositif de remorquage selon la revendication 5 ou 6, dans lequel le dispositif de largage comprend un fusible mécanique calibré pour commander le dispositif de largage et libérer le câble de traction de l'organe de fixation.

8. Dispositif de remorquage selon l'une quelconque des revendications 2 à 7, dans lequel les capteurs comprennent un émetteur muni d'une antenne programmé pour transmettre les signaux par liaison sans fil à l'unité centrale de l'aéronef à voilure tournante.

9. Dispositif de remorquage selon l'une quelconque des revendications 2 à 7, dans lequel les capteurs sont reliés par liaison filaire à l'organe de fixation du bras de fixation, cet organe de fixation comprenant un contact électrique destiné à être en contact avec un contact électrique correspondant sur l'aéronef de sorte qu'en position d'utilisation, les capteurs puissent transmettre les signaux par liaison filaire à l'unité centrale de l'aéronef à voilure tournante.

10. Aéronef à voilure tournante présentant un plan de rotation de la voilure et un axe de symétrie, **caractérisé en ce qu'**il comprend un moyen de fixation d'un dispositif de remorquage selon l'une quelconque des revendications 1 à 9, tel que le bras de fixation est perpendiculaire au plan de rotation de la voilure tournante.

11. Aéronef selon la revendication 10, dans lequel le moyen de fixation comporte un contact électrique relié à l'unité centrale afin de transmettre par liaison filaire, en position d'utilisation, des informations issues du ou des capteurs du dispositif de remorquage à l'unité centrale.

12. Aéronef selon l'une quelconque des revendications 10 ou 11, dans lequel la voilure tournante comprend au moins deux hélices tournantes dans un même plan.

13. Aéronef selon l'une quelconque des revendications 10 à 12, dans lequel l'unité centrale est programmée pour commander la voilure tournante en réponse à des signaux transmis par le ou les capteurs du dispositif de remorquage.

14. Procédé de remorquage d'un aéronef sans moteur, **caractérisé en ce qu'**il comprend les étapes suivantes :
(a) fournir un aéronef à voilure tournante sans pilote embarqué selon l'une quelconque des revendications 10 à 13 ;
(b) fixer un dispositif de remorquage selon l'une quelconque des revendications 1 à 9 sur l'aéronef à voilure tournante de telle sorte que le bras de fixation soit perpendiculaire au plan de rotation de la voilure tournante ;
(c) fixer une extrémité d'un câble de traction à une extrémité du bras de traction du dispositif de traction, et une autre extrémité du câble de traction à un aéronef sans moteur ;
(d) commander un décollage vertical de l'aéronef à voilure tournante à une hauteur dite « d'attente » en vol stationnaire ;
(e) commander un déplacement horizontal de l'aéronef pour obtenir une valeur de force de traction, calculée par l'unité centrale de l'aéronef à partir des mesures fournies par les capteurs du dispositif de traction, comprise entre une valeur nulle et une valeur seuil dite « de pré tension » suffisante pour tendre le câble de traction ;
(f) commander un déplacement horizontal et vertical de l'aéronef pour obtenir une valeur de force de traction, calculée par l'unité centrale de l'aéronef à partir des mesures fournies par les capteurs du dispositif de traction, comprise entre la valeur seuil de pré tension et une valeur seuil dite « de remorquage» suffisante pour faire décoller l'aéronef sans moteur et le remorquer jusqu'à une altitude de largage ;
(g) une fois l'altitude de largage atteinte, commander un déplacement horizontal et vertical de l'aéronef pour obtenir une valeur de force de traction, calculée par l'unité centrale de l'aéronef à partir des mesures fournies par les capteurs du dispositif de traction, sensiblement égale à une valeur seuil dite « de largage » ;
(h) commander un décrochage du câble entre l'aéronef sans moteur et l'aéronef à voilure tournante.

15. Procédé de remorquage selon la revendication 14, dans lequel au cours de l'étape (d), la hauteur d'attente est comprise entre 40 cm et 250 cm, de préférence environ 100 cm.

16. Procédé de remorquage selon la revendication 14 ou 15, dans lequel au cours de l'étape (f), la commande de déplacement horizontal et vertical est obtenue en augmentant progressivement la vitesse de rotation de la voilure tournante.

17. Procédé de remorquage selon l'une quelconque des revendications 14 à 16, dans lequel au cours de l'étape (h), le câble est décroché de l'aéronef sans moteur et reste accroché à l'aéronef à voilure tournante.

18. Procédé de remorquage selon l'une quelconque des revendications 14 à 16, dans lequel au cours de l'étape (h), le câble est décroché de l'aéronef à voilure tournante et reste accroché à l'aéronef sans moteur.

19. Procédé de remorquage selon l'une quelconque des revendications 14 à 16, dans lequel au cours de l'étape (h), le câble est décroché de l'aéronef sans moteur et de l'aéronef à voilure tournante.

20. Procédé de remorquage selon l'une quelconque des revendications 14 à 19, comprenant, en outre, une étape (i) de commande d'un retour de l'aéronef à voilure tournante selon une trajectoire de sécurité et d'un atterrissage à une position géographique déterminée.

## Patentansprüche

1. Schleppvorrichtung (100) eines Flugzeugs ohne Motor (P) durch ein Drehflügelflugzeug ohne einen an Bord befindlichen Piloten (1), umfassend eine zentrale Steuereinheit (11) und eine Ebene (P1) zum Drehen des Drehflügels Flügel, **dadurch gekennzeichnet, dass** die Schleppvorrichtung umfasst:
- Ein Befestigungsarm (110) am Drehflügler, der eine Längsachse (X) namens "Gieren" aufweist und mit einem Befestigungselement (111) versehen ist, das dazu bestimmt ist, an einem komplementären Befestigungselement des Flugzeugs senkrecht zur Ebene befestigt zu werden Drehung des Drehflügels in Gebrauchsstellung; und - einen Zugarm (120), der eine als "Rolle" bezeichnete Längsachse (Z) aufweist und dessen eines Ende dazu bestimmt ist, mit einem Zugkabel (130) des Flugzeugs ohne Triebwerk verbunden zu werden, und dessen eines Ende an der Befestigung angebracht ist Schwenkarm, um mindestens einen Rotationsfreiheitsgrad in Bezug auf das Drehflügler um eine Achse (Y), die als "Pitch" bezeichnet wird und senkrecht zur Längsachse (X) des Befestigungsarms ist, zu bieten ,
wobei die Abschleppvorrichtung Folgendes umfasst:
• ein Messmittel (143) für die zwischen dem Kabel und dem Zugarm ausgeübte Zugkraft; und
• ein Mittel zum Messen einer relativen Höhe der zwei Flugzeuge.

2. Anhängevorrichtung nach Anspruch 1, wobei die Traktionskraftmesseinrichtung ein Kraftsensor (143) ist und die Relativhöhenmesseinrichtung einen Winkelsensor (141), genannt "of pitch", Drehwinkel des Zugarms, umfasst um die Nickachse.

3. Schleppvorrichtung nach Anspruch 2, bei der der Zugarm relativ zum Drehflügler nach mindestens zwei Freiheitsgraden drehbar um zwei Drehachsen schwenkbar gelagert ist: die erste Nickachse (Y) und eine zweite Achse, "Gieren" genannt, parallel zur Längsachse (X) des Befestigungsarms, wobei die Schleppvorrichtung einen zweiten Winkelsensor (142), "Gieren" genannt, des Drehwinkels des Zugarms um die Gierachse umfasst.

4. Schleppvorrichtung nach Anspruch 3, bei der der Zugarm relativ zum Drehflügler nach drei Freiheitsgraden drehbar um drei Drehachsen schwenkbar gelagert ist: die erste Nickachse (Y), die zweite Gierachse (X) und eine dritte Achse (Z), genannt "Roll"-Achse, parallel zur Längsachse des Zugarms, wobei die Schleppvorrichtung einen dritten Sensor (144), genannt "Roll", einen Drehwinkel um die Rolle umfasst Achse.

5. Schleppvorrichtung nach einem der Ansprüche 1 bis 4, wobei das Zugseil an einem Ende des Zugarms durch eine steuerbare Freigabevorrichtung (150) befestigt ist, die in der Lage ist, das Zugseil von der Traktion zu lösen.

6. Anhängevorrichtung nach Anspruch 5, bei der die Lösevorrichtung umfasst:
- ein Einrichtung (151) zur reversiblen Fixierung des Zugseils;
- ein Entriegelungselement (152), das mit dem Befestigungselement in Eingriff steht, um das Befestigungselement zu entriegeln und das Zugkabel von dem Befestigungselement zu lösen;
- Mindestens eine Servosteuerung (153), die in der Lage ist, die Entriegelungsvorrichtung auf Befehl von der Zentraleinheit des Drehflüglers in der Gebrauchsposition zu betätigen.

7. Anhängevorrichtung nach Anspruch 5 oder 6, wobei die Freigabevorrichtung eine kalibrierte mechanische Sicherung umfasst, um die Freigabevorrichtung zu steuern und das Zugseil von dem Befestigungselement zu lösen.

8. Schleppvorrichtung nach einem der Ansprüche 2 bis 7, bei der die Sensoren einen Sender umfassen, der mit einer Antenne versehen ist, die so programmiert ist, dass sie die Signale drahtlos an die Zentraleinheit des Drehflüglers sendet.

9. Anhängevorrichtung nach einem der Ansprüche 2 bis 7, wobei die Sensoren durch Drahtverbindung mit dem Befestigungselement des Befestigungsarms verbunden sind, wobei dieses Befestigungselement einen elektrischen Kontakt umfasst, der dazu bestimmt ist, mit einem entsprechenden elektrischen Kontakt an dem in Kontakt zu sein Flugzeug, so dass die Sensoren in der Gebrauchsstellung die Signale drahtgebunden an die Zentraleinheit des Drehflüglers übertragen können.

10. Drehflügler mit einer Rotationsebene des Flügels und einer Symmetrieachse, **dadurch gekennzeichnet, dass** es Mittel zum Befestigen einer Schleppvorrichtung nach einem der Ansprüche 1 bis 9 umfasst, derart, dass der Befestigungsarm senkrecht zu dem ist Rotationsebene des Drehflügels.

11. Flugzeug nach Anspruch 10, bei dem das Befestigungsmittel einen elektrischen Kontakt umfasst, der mit der Zentraleinheit verbunden ist, um in Gebrauchsstellung Informationen von dem/den Sensor(en) der Schleppvorrichtung per Drahtverbindung an die Zentraleinheit zu übertragen Einheit.

12. Luftfahrzeug nach einem der Ansprüche 10 oder 11, wobei der Drehflügel mindestens zwei rotierende Propeller in derselben Ebene umfasst.

13. Flugzeug nach einem der Ansprüche 10 bis 12, bei dem die Zentraleinheit so programmiert ist, dass sie den Drehflügel in Reaktion auf Signale steuert, die von dem/den Sensor(en) der Schleppvorrichtung übertragen werden

14. Verfahren zum Schleppen eines Flugzeugs ohne Triebwerk, **dadurch gekennzeichnet, dass** es folgende Schritte umfasst:
(a) Bereitstellen eines unbemannten Drehflüglers nach einem der Ansprüche 10 bis 13;
(b) Anbringen einer Schleppvorrichtung nach einem der Ansprüche 1 bis 9 an dem Drehflügelflugzeug derart, dass der Befestigungsarm senkrecht zur Rotationsebene des Drehflügels ist;
(c) ein Ende eines Schleppseils an einem Ende des Schlepparms der Schleppvorrichtung und ein anderes Ende des Schleppseils an einem antriebslosen Luftfahrzeug befestigen;
(d) einen senkrechten Start des Drehflüglers in einer schwebenden "Halte"-Höhe befehlen;
(e) Befehlen einer horizontalen Bewegung des Luftfahrzeugs, um einen Zugkraftwert zu erhalten, der von der Zentraleinheit des Luftfahrzeugs aus den von den Sensoren der Zugvorrichtung gelieferten Messungen berechnet wird und zwischen einem Nullwert und einem sogenannten "Vor- Spannung" Schwellenwert, der ausreicht, um das Zugseil zu spannen;
(f) Befehlen einer horizontalen und vertikalen Bewegung des Flugzeugs, um einen Traktionskraftwert zu erhalten, der von der Zentraleinheit des Flugzeugs aus den von den Sensoren der Traktionsvorrichtung gelieferten Messungen berechnet wird und zwischen dem Schwellenwert der Vorspannung und a liegt - "Schlepp"-Schwellenwert genannt, der ausreicht, um das Luftfahrzeug ohne Triebwerk abheben und auf eine Auslösehöhe schleppen zu lassen;
(g) sobald die Auslösehöhe erreicht ist, Befehlen einer horizontalen und vertikalen Bewegung des Flugzeugs, um einen Traktionskraftwert zu erhalten, der von der Zentraleinheit des Flugzeugs aus den von den Sensoren der Traktionsvorrichtung gelieferten Messungen berechnet wird und im Wesentlichen gleich ist ein sogenannter "Release"-Schwellenwert;
(h) einen Strömungsabriss des Kabels zwischen dem antriebslosen Luftfahrzeug und dem Drehflügler zu befehlen.

15. Schleppverfahren nach Anspruch 14, wobei während Schritt (d) die Bereitschaftshöhe zwischen 40 cm und 250 cm, vorzugsweise etwa 100 cm, beträgt.

16. Schleppverfahren nach Anspruch 14 oder 15, wobei während Schritt (f) die Steuerung der horizontalen und vertikalen Bewegung durch allmähliches Erhöhen der Rotationsgeschwindigkeit des Drehflügels erhalten wird.

17. Schleppverfahren nach einem der Ansprüche 14 bis 16, bei dem während Schritt (h) das Kabel von dem triebwerkslosen Flugzeug ausgehakt wird und an dem Drehflügler befestigt bleibt.

18. Schleppverfahren nach einem der Ansprüche 14 bis 16, bei dem während Schritt (h) das Kabel von dem Drehflügelflugzeug ausgehakt wird und an dem motorlosen Flugzeug befestigt bleibt.

19. Schleppverfahren nach einem der Ansprüche 14 bis 16, bei dem während Schritt (h) das Kabel von dem triebwerkslosen Flugzeug und von dem Drehflügler ausgehakt wird.

20. Schleppverfahren nach einem der Ansprüche 14 bis 19, ferner umfassend einen Schritt (i) des Steuerns einer Rückkehr des Drehflüglers entlang einer Sicherheitsflugbahn und einer Landung an einer bestimmten geographischen Position.

## Claims

1. Towing device (100) of an aircraft without a motor (P) by a rotary-wing aircraft without an on-board pilot (1) comprising a central control unit (11) and a plane (P1) for rotation of the rotary wing , **characterized in that** the towing device comprises:
- A fixing arm (110) to the rotary wing aircraft, having a longitudinal axis (X) called "yaw" and provided with a fixing member (111) intended to be fixed to a complementary fixing member of the aircraft, perpendicular to the plane of rotation of the rotary wing, in the position of use; and
- A traction arm (120), having a longitudinal axis (Z) called "roll", and one end of which is intended to be connected to a traction cable (130) of the aircraft without engine and one end is mounted on the attachment arm in a pivoting manner so as to present at least one degree of freedom in rotation with respect to the rotary-wing aircraft, around an axis (Y), called "pitch", perpendicular to the axis longitudinal (X) of the fixing arm,
the towing device comprising:
• a measuring means (143) of tensile force exerted between the cable and the traction arm; and
• a means of measuring a relative altitude of the two aircraft.

2. Hitch according to claim 1, wherein the traction force measuring device is a force sensor (143) and the relative height measuring device comprises an angle sensor (141), called "pitch », angle of rotation of the towing arm around the pitch axis.

3. Towing device according to claim 2, in which the towing arm is mounted so as to be able to rotate relative to the rotorcraft according to at least two degrees of freedom around two pivot axes: the first pitch axis (Y) and a second axis, called "yaw", parallel to the longitudinal axis (X) of the attachment arm 10, the towing device comprising a second angle sensor (142), called "yaw", of the angle of rotation of the trailing arm around the yaw axis.

4. Towing device according to claim 3, in which the towing arm is pivoted relative to the rotorcraft according to three degrees of freedom around three axes of rotation: the first pitch axis (Y), the second yaw axis (X ) and a third axis (Z), called "roll".-axis, parallel to the longitudinal axis of the towing arm, the towing device comprising a third sensor (144), called "roll", angle of rotation around the roll axis.

5. A tow device according to any of claims 1 to 4, wherein the tow rope is attached to one end of the tow arm by a controllable release device (150) capable of releasing the tow rope from the pull.

6. Coupling according to claim 5, in which the unlocking device comprises:
- a device (151) for reversibly fixing the traction cable;
- an unlocking member (152) engaged with the clip to unlock the clip and release the pull cord from the clip;
- at least one servo-control (153) capable of actuating the unlocking device in the position of use on command from the central unit of the rotorcraft.

7. Towing device according to claim 5 or 6, wherein the release device comprises a calibrated mechanical fuse to control the release device and release the traction cable from the fixing member.

8. Towing device according to any one of claims 2 to 7, in which the sensors comprise a transmitter provided with an antenna programmed to transmit the signals by wireless link to the central unit of the rotary-wing aircraft.

9. Towing device according to any one of claims 2 to 7, wherein the sensors are connected by wire connection to the fixing member of the fixing arm, this fixing member comprising an electrical contact intended to be in contact with a corresponding electrical contact on the aircraft so that in the position of use, the sensors can transmit the signals by wire link to the central unit of the rotary-wing aircraft.

10. Rotary-wing aircraft having a plane of rotation of the wing and an axis of symmetry, **characterized in that** it comprises means for fixing a towing device according to any one of claims 1 to 9, such that the fixing arm is perpendicular to the plane of rotation of the rotary wing.

11. Aircraft according to claim 10, in which the fixing means comprises an electrical contact connected to the central unit in order to transmit by wire connection, in the position of use, information from the sensor(s) of the towing device to the central unit.

12. Aircraft according to any one of claims 10 or 11, wherein the rotary wing comprises at least two rotating propellers in the same plane.

13. Aircraft according to any one of claims 10 to 12, in which the central unit is programmed to control the rotary wing in response to signals transmitted by the sensor(s) of the towing device

14. Method for towing an aircraft without an engine, **characterized in that** it comprises the following steps:
(a) providing an unmanned rotary wing aircraft according to any one of claims 10 to 13;
(b) attaching a towing device according to any one of claims 1 to 9 to the rotary wing aircraft such that the attachment arm is perpendicular to the plane of rotation of the rotary wing;
(c) attach one end of a tow rope to one end of the tow arm of the tow device, and another end of the tow rope to an unpowered aircraft;
(d) command a vertical take-off of the rotary-wing aircraft at a hovering "hold" height;
(e) commanding a horizontal movement of the aircraft to obtain a traction force value, calculated by the central unit of the aircraft from the measurements supplied by the sensors of the traction device, comprised between a zero value and a so-called "pre-tension" threshold value sufficient to tension the traction cable;
(f) commanding a horizontal and vertical movement of the aircraft to obtain a traction force value, calculated by the central unit of the aircraft from the measurements supplied by the sensors of the traction device, comprised between the threshold value pre-tension and a so-called "tow" threshold value sufficient to make the aircraft take off without an engine and tow it to a release altitude;
(g) once the release altitude has been reached, commanding a horizontal and vertical movement of the aircraft to obtain a traction force value, calculated by the central unit of the aircraft from the measurements provided by the sensors of the traction device, substantially equal to a so-called "release" threshold value;
(h) command a stall of the cable between the unpowered aircraft and the rotary-wing aircraft.

15. Towing method according to claim 14, wherein during step (d), the stand-by height is between 40 cm and 250 cm, preferably about 100 cm.

16. Towing method according to claim 14 or 15, wherein during step (f), the horizontal and vertical movement control is obtained by gradually increasing the speed of rotation of the rotary wing.

17. Towing method according to any one of claims 14 to 16, in which during step (h), the cable is unhooked from the engineless aircraft and remains attached to the rotary-wing aircraft.

18. Towing method according to any one of claims 14 to 16, in which during step (h), the cable is unhooked from the rotary-wing aircraft and remains attached to the engineless aircraft.

19. Towing method according to any one of claims 14 to 16, in which during step (h), the cable is unhooked from the engineless aircraft and from the rotary-wing aircraft.

20. Towing method according to any one of claims 14 to 19, further comprising a step (i) of controlling a return of the rotary-wing aircraft along a safety trajectory and a landing at a specific geographical position.
